# EUROPEAN PATENT APPLICATION

(11) **EP 3 051 767 A1**
(43) Date of publication of application: **03.08.2016**
(21) Application number: 15184475.0
(22) Date of filing: 09.09.2015
(51) Int. Cl.: H04L 29/06

(54) **METHOD AND APPARATUS FOR AUTOMATICALLY IDENTIFYING SIGNATURE OF MALICIOUS TRAFFIC USING LATENT DIRICHLET ALLOCATION**

(30) Priority: 27.01.2015 KR 20150012590
(71) Applicant: Electronics and Telecommunications Research Institute, Daejeon 34129 (KR)
(72) Inventor: LEE, Suchul, 34186 Daejeon (KR); LEE, Sungil, 34186 Daejeon (KR); PARK, Kyungho, 34186 Daejeon (KR); KIM, Sungho, 34186 Daejeon (KR); YOON, Han Jun, 34186 Daejeon (KR); LEE, Do Hoon, 34186 Daejeon (KR)
(74) Representative: Betten & Resch

(57) **Abstract**

Disclosed herein are a method and apparatus for automatically identifying the signature of malicious traffic using latent Dirichlet allocation. A signature identification apparatus generates one or more network flows by processing input data, and then generates a signature of a detection rule by applying latent Dirichlet allocation to the one or more network flows. The signature identification apparatus automatically identifies the signature of malicious traffic using distribution information of keywords for each cluster, for network traffic classified by clustering.

## Description

### BACKGROUND OF THE INVENTION

### 1. Technical Field

Embodiments generally relate to the identification of malicious traffic signatures, and more particularly, to a method and apparatus for automatically identifying the signature of malicious traffic using latent Dirichlet allocation.

### 2. Description of the Related Art

The Internet has become a huge information space that may be easily accessed by normal persons in their daily lives, and various types of information services are provided over the Internet without temporal or spatial limitation. Such information services have ushered in a hyper-connected society.

Meanwhile, with the advent of various types of Internet technologies and applications, the adverse effects of the Internet technologies and applications have also increased. One such adverse effect is the intrusion of malicious traffic.

As an information protection system that is popularly used, an intrusion detection and prevention system is present. Such an intrusion detection and prevention system responds to various types of Internet worms, malicious code, Denial of Service (DoS) attacks, etc. by utilizing a method of detecting a specific bit pattern included in the payload of malicious traffic based on detection rules.

However, such a method of detecting a bit pattern is problematic in that it may be used only for previously known traffic patterns.

Further, recently, malicious code and malicious traffic has come to adopt polymorphism as a detection avoidance strategy. 'Polymorphism' means that the malicious code or traffic deforms its own signature pattern when generating a replica of itself.

When malicious code or malicious traffic adopts polymorphism, the bit pattern detection method cannot detect intentionally deformed malicious code or malicious traffic. In order to respond to polymorphism, a security expert must personally collect and analyze malicious code or traffic and individually create detection rules based on the results of analysis.

As described above, as preceding technologies that use detection rules, Korean Patent Application Publication No. 10-2006-0007581 and Korean Patent No. 10-0628329 are disclosed. However, such conventional technology is limited in that it is impossible to respond to the polymorphism of malicious code and malicious traffic, and new detection rules must be created based on a security expert's analysis.

### SUMMARY OF THE INVENTION

An embodiment is intended to provide a method and apparatus for clustering network traffic containing malicious code or malicious traffic using latent Dirichlet allocation.

Another embodiment is intended to provide a method and apparatus for automatically identifying the signature of malicious traffic using the distribution information of keywords for respective clusters, with respect to network traffic classified by clustering.

A further embodiment is intended to provide a method and apparatus for identifying the signature of a detection rule, which allow an intrusion detection system to detect unknown malicious code or malicious traffic at a high detection rate.

Yet another embodiment is intended to provide a method and apparatus for identifying the signature of a detection rule, which allow an intrusion detection system to detect malicious code or malicious traffic having polymorphism as an internal feature at a high detection rate.

Still another embodiment is intended to provide a method and apparatus for automatically performing statistical analysis and signature extraction on malicious code or malicious traffic when a security expert who operates an intrusion detection system creates a detection rule to be used in the intrusion detection system.

In accordance with an aspect, there is provided a signature identification method, including generating one or more network flows by processing input data; and generating a signature of a detection rule by applying latent Dirichlet allocation to the one or more network flows.

The signature identification method may further include receiving the input data.

The input data may include at least one of malicious code data and malicious traffic data.

Generating the one or more network flows may include dividing the input data into the one or more network flows.

Generating the one or more network flows may include extracting at least one substring from the one or more network flows; and calculating a frequency of discovery of the at least one substring from each of the one or more network flows.

The at least one substring may include all substrings discovered in the one or more network flows.

Generating the signature of the detection rule may include classifying the one or more network flows into clusters; extracting a substring that satisfies a predetermined condition from the one or more network flows classified into the clusters; and setting the extracted substring as the signature of the detection rule required in order to detect the one or more network flows classified into the clusters.

The one or more network flows may be classified into the clusters using a learned allocation model for latent Dirichlet allocation.

Generating the signature of the detection rule may further include learning the allocation model for latent Dirichlet allocation using the one or more network flows.

An environmental variable for learning may include a parameter for Dirichlet distribution.

The Dirichlet distribution may enable modeling of a probability that, for the one or more network flows, each network flow will contain at least one certain topic.

The substring that satisfies the predetermined condition may be a substring having a high discovery frequency.

The substring that satisfies the predetermined condition may be a substring having a discovery frequency that is equal to or greater than a predetermined value.

The signature identification method may further include outputting results of applying the latent Dirichlet allocation.

Outputting the results of applying the latent Dirichlet allocation may include outputting statistical data for the latent Dirichlet allocation.

The statistical data may be output for each classified cluster.

In accordance with another aspect, there is provided a signature identification apparatus, including a preprocessing unit for generating one or more network flows by processing input data; and a generation unit for generating a signature of a detection rule by applying latent Dirichlet allocation to the one or more network flows.

The signature identification apparatus may further include a reception unit for receiving the input data.

The preprocessing unit may extract at least one substring from the one or more network flows and calculate a frequency of discovery of the at least one substring from each of the one or more network flows.

The generation unit may classify the one or more network flows into clusters, extracts a substring that satisfies a predetermined condition from the one or more network flows classified into the clusters, and sets the extracted substring as the signature of the detection rule required in order to detect the one or more network flows classified into the clusters.

The signature identification apparatus may further include an output unit for outputting results of applying the latent Dirichlet allocation.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a configuration diagram showing a signature identification apparatus for automatically identifying the signature of malicious traffic using latent Dirichlet allocation according to an embodiment;
FIG. 2 is a flowchart showing a signature identification method for automatically identifying the signature of malicious traffic using latent Dirichlet allocation according to an embodiment;
FIG. 3 is a configuration diagram showing a reception unit according to an embodiment;
FIG. 4 is a flowchart showing an input data reception method according to an embodiment;
FIG. 5 is a configuration diagram showing a preprocessing unit according to an embodiment;
FIG. 6 is a flowchart showing a preprocessing method according to an embodiment;
FIG. 7 is a diagram showing a method of extracting a substring according to an embodiment;
FIG. 8 is a configuration diagram showing a generation unit according to an embodiment;
FIG. 9 is a flowchart showing a latent Dirichlet allocation method according to an embodiment;
FIG. 10 is a configuration diagram showing an output unit according to an embodiment;
FIG. 11 is a flowchart showing an output method according to an embodiment; and
FIG. 12 is a configuration diagram showing a computer system for implementing the signature identification apparatus according to an embodiment.

### DETAILED DESCRIPTION

The embodiments will be described in detail below with reference to the accompanying drawings. It should be understood that the embodiments are different from each other, but do not need to be mutually exclusive. The terms used in the embodiments may be construed based on the substantial meanings of the terms and the overall details of the present specification, rather than the names of the terms. In the embodiments, the connection relationship between a specific component and other components may include not only a direct connection relationship between the components, but also an indirect connection relationship between the components via a certain component. The same reference numerals presented in the drawings may designate the same components.

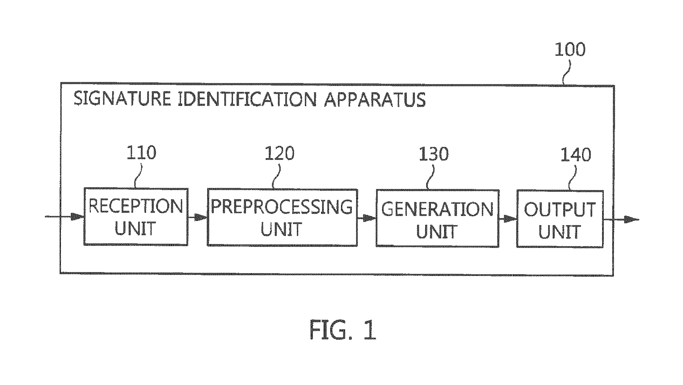

FIG. 1 is a configuration diagram showing a signature identification apparatus for automatically identifying the signature of malicious traffic using latent Dirichlet allocation according to an embodiment.

As shown in FIG. 1, a signature identification apparatus 100 according to the embodiment includes a reception unit 100, a preprocessing unit 120, a generation unit 130, and an output unit 140. In accordance with the embodiment, at least some of the reception unit 110, the preprocessing unit 120, the generation unit 130, and the output unit 140 may be program modules, and may communicate with an external device or system. Such program modules may be included in the signature identification apparatus 100 in the form of operating systems, application program modules, or other program modules. Physically, the program modules may be stored in various types of well-known storage devices. At least some of the program modules may be stored in a remote storage device capable of communicating with the signature identification apparatus 100. Such program modules may include, but are not limited to, a routine, a subroutine, a program, an object, a component, and a data structure for performing specific tasks, which will be described later, or executing specific abstract data types, according to the present invention. Each of the program modules may be composed of instructions executed by at least one processor of the signature identification apparatus 100.

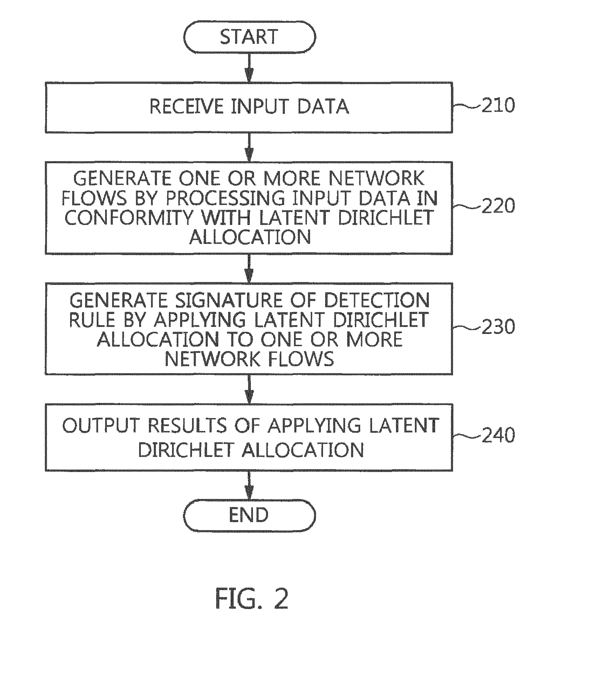

The functions and operations of the reception unit 110, the preprocessing unit 120, the generation unit 130, and the output unit 140 will be described in detail with reference to FIGS. 2 to 11.

FIG. 2 is a flowchart showing a signature identification method for automatically identifying the signature of malicious traffic using latent Dirichlet allocation according to an embodiment.

At step 210, the reception unit 110 may receive input data. The reception unit 110 may provide data to be used by the method for automatically identifying the signature of malicious traffic using latent Dirichlet allocation.

The input data may include at least one of malicious code data and malicious traffic data.

The user may input malicious network trace data including malicious code or malicious traffic, and the reception unit 110 may receive the input malicious network trace data.

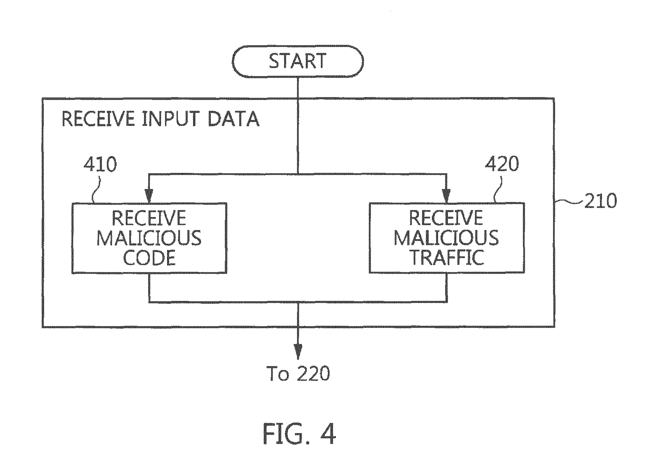

A method of receiving the input data according to the embodiment will be described in detail later with reference to FIG. 4.

At step 220, the preprocessing unit 120 may generate one or more network flows by processing the input data in conformity with latent Dirichlet allocation. That is, the preprocessing unit 120 may generate one or more network flows by processing the input data to be suitable for the latent Dirichlet allocation.

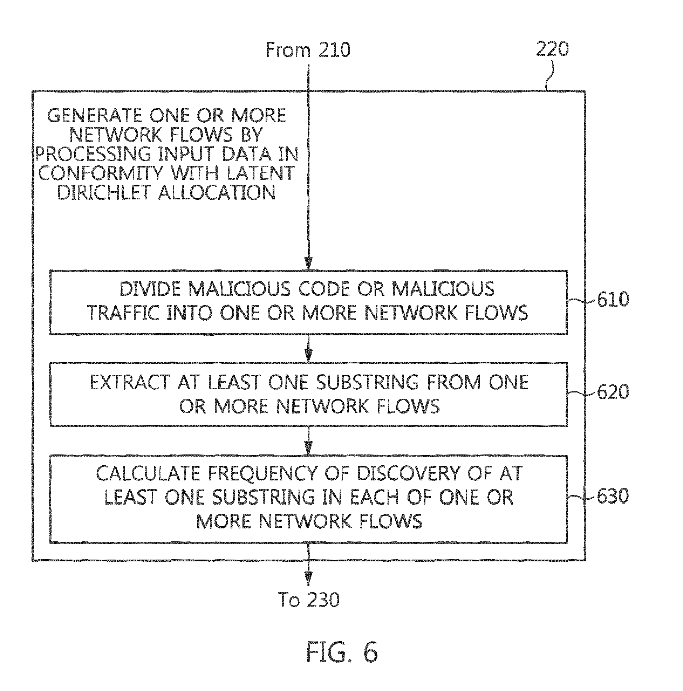

The preprocessing method performed by the preprocessing unit 120 will be described in detail later with reference to FIG. 6.

The preprocessing unit 120 may be connected to the reception unit 110 and may receive the input data from the reception unit 110.

At step 230, the generation unit 130 may generate the signature of a detection rule by applying latent Dirichlet allocation to the one or more network flows. The generation unit 130 may perform latent Dirichlet allocation using the one or more network flows.

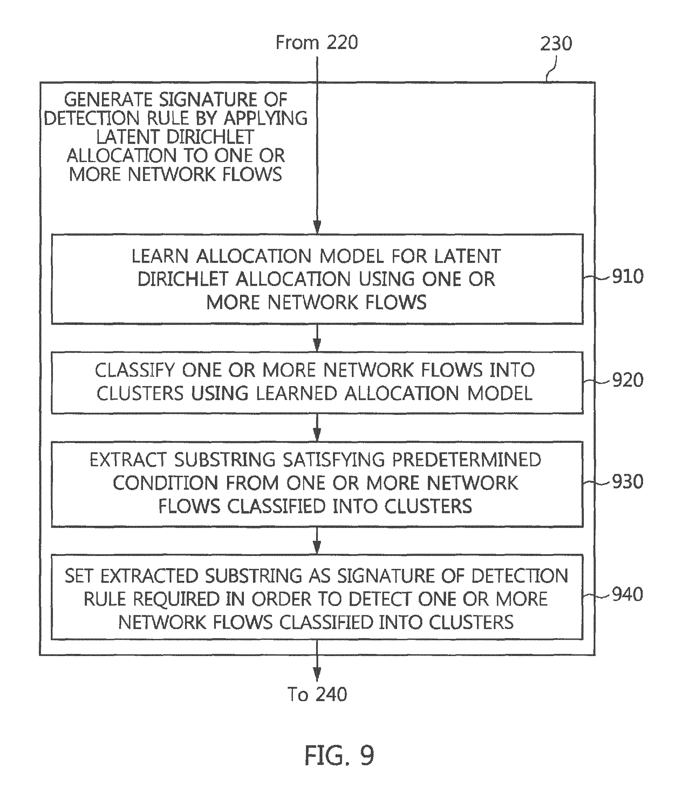

The latent Dirichlet allocation according to the embodiment will be described in detail later with reference to FIG. 9.

The generation unit 130 may be connected to the preprocessing unit 120 and may receive the one or more network flows or the like from the generation unit 130.

At step 240, the output unit 140 may output the results of applying the latent Dirichlet allocation.

The output unit may output statistical data related to the results of applying the latent Dirichlet allocation.

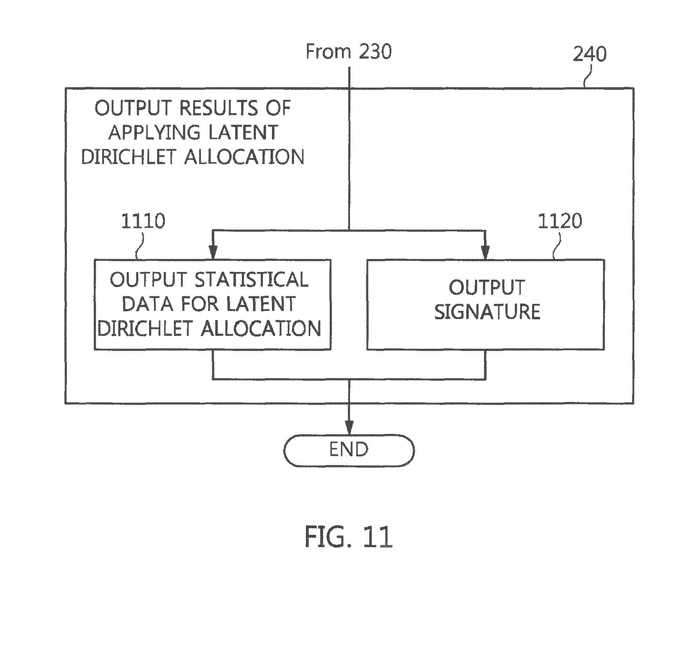

The result output method according to an embodiment will be described in detail later with reference to FIG. 11.

The output unit 140 may be connected to the generation unit 130, and may acquire information required in order to generate statistical data from the generation unit 130.

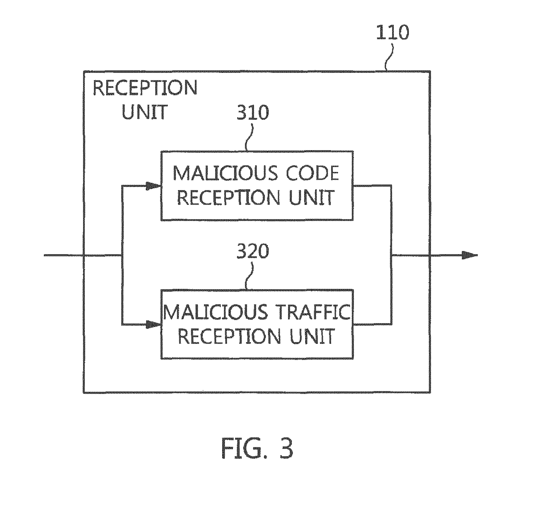

FIG. 3 is a configuration diagram showing the reception unit according to an embodiment.

The reception unit 110 may include a malicious code reception unit 310 and a malicious traffic reception unit 320.

The malicious code reception unit 310 may receive malicious code as input data.

The term 'malicious code' collectively designates software that may negatively influence a user's computer without passing through a network. Such malicious code may include malware such as computer viruses, spyware, and Trojan horses.

The malicious traffic reception unit 320 may receive malicious traffic as input data.

The term 'malicious traffic' collectively designates software that is propagated over the network and that may negatively influence the user's computer. Such malicious traffic may include malware such as computer viruses, spyware, and Trojan horses.

One or more pieces of malicious network trace data may be provided by the malicious code reception unit 310 and the malicious traffic reception unit 320.

FIG. 4 is a flowchart showing an input data reception method according to an embodiment.

Step 210, described with reference to FIG. 2, may include steps 410 and 420.

At step 410, the malicious code reception unit 310 may receive malicious code as input data.

At step 420, the malicious traffic reception unit 320 may receive malicious traffic as input data.

At least one of steps 410 and 420 may be selectively performed to provide input data.

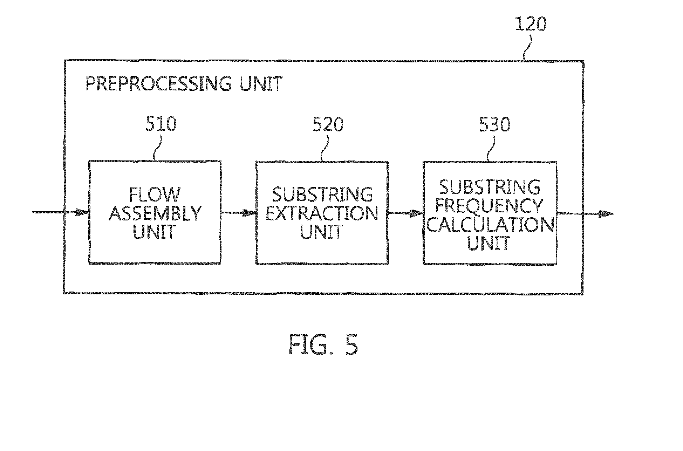

FIG. 5 is a configuration diagram showing the preprocessing unit according to an embodiment.

The preprocessing unit 120 may include a flow assembly unit 510, a substring extraction unit 520, and a substring frequency calculation unit 530.

The flow assembly unit 510 may divide malicious code or malicious traffic, which is input data, into one or more network flows.

The flow assembly unit 510 may assemble the malicious code or malicious traffic, that is, the input data, on a network flow basis. The input data may be processed by the flow assembly unit 510 into a form that is usable by the latent Dirichlet allocation method.

The substring extraction unit 520 may extract at least one substring from the one or more network flows. More specifically, the substring extraction unit 520 may extract at least one substring from each of the one or more network flows.

The substring extraction unit 520 may extract all substrings that are discovered in the one or more network flows. In other words, the at least one substring may include all substrings discovered in the one or more network flows.

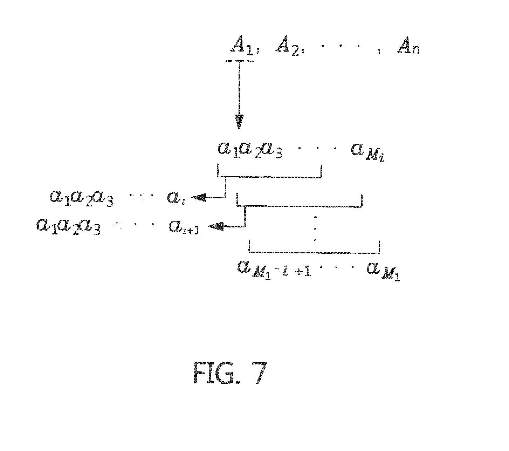

The extraction of a substring according to the embodiment will be illustrated later with reference to FIG. 7.

The substring frequency calculation unit 530 may calculate the frequency of discovery of at least one substring in each of the one or more network flows.

The substring frequency calculation unit 530 may calculate the frequency of discovery of each of all substrings in each of the one or more network flows.

For example, when the data of a network flow is "0x123AB2123AB", the frequency of discovery of the substring "0x123A" may be 2. In the above-described manner, substrings may be extracted from all of the one or more network flows, and the frequency with which each substring is discovered in each of the one or more network flows may be measured.

FIG. 6 is a flowchart showing a preprocessing method according to an embodiment.

The preprocessing step described above with reference to FIG. 2 may include the following steps 610, 620, and 630.

At step 610, the flow assembly unit 510 may divide malicious code or malicious traffic, i.e. input data, into one or more network flows.

At step 620, the substring extraction unit 520 may extract at least one substring from the one or more network flows. The substring extraction unit 520 may extract at least one substring from each of the one or more network flows.

The substring extraction unit 520 may extract all substrings discovered in the one or more network flows. In other words, the at least one substring may include all substrings discovered in the one or more network flows.

At step 630, the substring frequency calculation unit 530 may calculate the frequency of discovery of at least one substring in each of the one or more network flows.

The substring frequency calculation unit 530 may calculate the frequency of discovery of each of all substrings in each of the one or more network flows.

FIG. 7 illustrates a method of extracting a substring according to an embodiment.

In FIG. 7, input data includes n flows A₁, A₂, ... , An. In other words, the input data may be divided into A₁, A₂, ..., Aₙ, where n is an integer equal to or greater than 1.

When i is equal to or greater than 1 and is less than or equal to n, the length of flow Aᵢ may be Mi. Each flow may be regarded as a character string. When the length of flow Aᵢ is Mi, Aᵢ may be the character string *a*₁*a*₂*a*₃···*a_{Mᵢ}*.

'*l*' may be the minimum length of a substring to be extracted from Aᵢ. The first substring having a length of *l*, among the substrings of Ai, may be *a*₁*a*₂···*a_{I}*. While the start location of the substring is sequentially shifted to the right by one character, the subsequent substrings may be successively extracted. The last substring having a length of *l* may be *a*_{*M*₁*-l*+1} ···*a*_{*M*₁}.

The substring extraction unit 520 may perform such a substring extraction procedure for all of the one or more network flows.

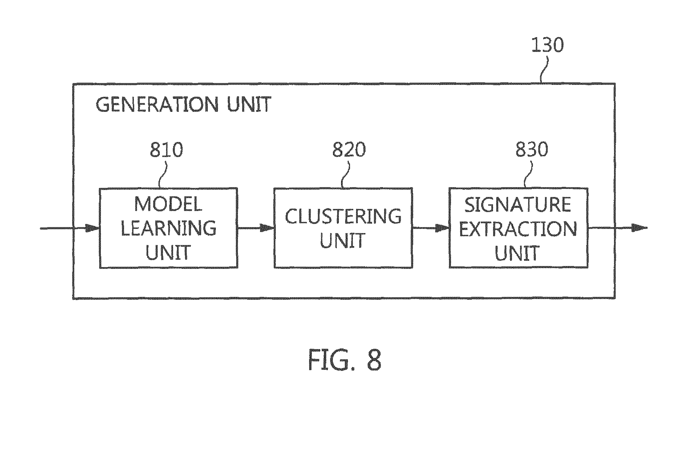

FIG. 8 is a configuration diagram showing the generation unit according to an embodiment.

The generation unit 130 may include a model learning unit 810, a clustering unit 820, and a signature extraction unit 830.

The model learning unit 810 may learn an allocation model for latent Dirichlet allocation using one or more network flows.

The environmental variables for learning may include α(alpha), β(beta), nTopic, nWord, and nIteration.

α may be a parameter for Dirichlet allocation.

β may be a matrix indicating the probability that each of nWord types of words for nTopic topics will be generated. The size of the matrix may be nTopic x nWord.

nTopic may be the number of topics.

nWord may be the number of words.

nIteration may be the number of iterations of learning of a latent Dirichlet allocation model.

The Dirichlet distribution enables the modeling of the probability that, for given one or more network flows, each of the network flows will contain at least one certain topic.

The clustering unit 820 may classify the one or more network flows into clusters using the learned allocation model. For example, the clustering unit 820 may cluster malicious code or malicious traffic via the latent Dirichlet allocation model learned by the model learning unit 810.

For each of one or more network flows constituting a cluster, a weight Θ (theta) may be assigned to each of nTopic topics. The topic of each of nWord words may be selected using a binominal distribution based on weights, and the actual words may be selected based on the weights of the topics of respective words.

The character signature extraction unit 830 may extract a substring that satisfies a predetermined condition from the one or more network flows classified into the clusters.

For example, the signature extraction unit 830 may extract a substring having a high discovery frequency from the one or more network flows classified into the clusters. Alternatively, the signature extraction unit 830 may extract a substring having a relatively high discovery frequency from the one or more network flows classified into clusters. In yet another alternative, the signature extraction unit 830 may extract a substring having a discovery frequency that is equal to or greater than a predetermined value from the one or more network flows classified into clusters.

In other words, the substring that satisfies the predetermined condition may be either a substring having a high discovery frequency, or a substring having a discovery frequency that is equal to or greater than a predetermined value.

The signature extraction unit 830 may set the extracted substring as the signature of a detection rule required in order to detect the one or more network flows classified into clusters.

The substring may be used as a keyword for the detection rule. The signature may be a substring that satisfies a predetermined condition in each cluster. For example, the signature may be a substring having a high discovery frequency in each cluster. That is, the signature extraction unit 830 may output the signature of a detection rule required in order to detect the network flows constituting the cluster.

FIG. 9 is a flowchart showing a latent Dirichlet allocation method according to an embodiment.

Step 230, described above with reference to FIG. 2, may include the following steps 910, 920, 930, and 940.

At step 910, the model learning unit 810 may learn an allocation model for latent Dirichlet allocation using one or more network flows.

At step 920, the clustering unit 820 may classify the one or more network flows into clusters using the learned allocation model.

At step 930, the signature extraction unit 830 may extract a substring that satisfies a predetermined condition from the one or more network flows classified into clusters.

At step 940, the signature extraction unit 830 may set the extracted substring as the signature of the detection rule required in order to detect the one or more network flows classified into the clusters.

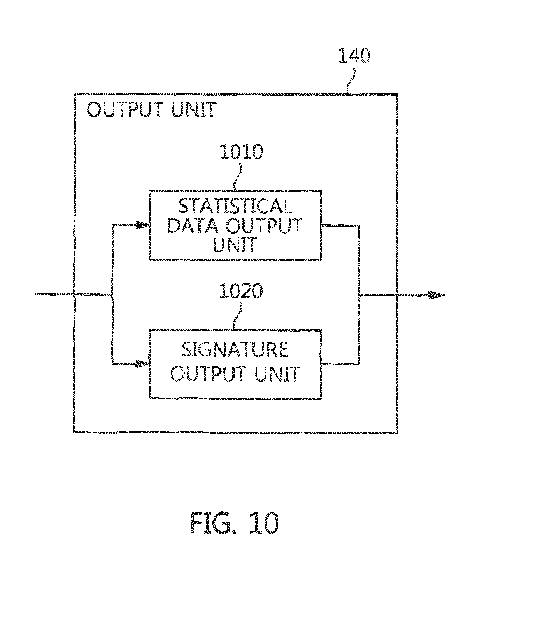

FIG. 10 is a configuration diagram showing the output unit according to an embodiment.

The output unit 140 may include a statistical data output unit 1010 and a signature output unit 1020.

The statistical data output unit 1010 may output statistical data for latent Dirichlet allocation.

The statistical data may include π(phi), 0(theta), a word set, and nIteration for each of the classified clusters. The statistical data may be output for each of the classified clusters.

π may be the distribution of words for each of topics.

nIteration may be the number of iterations of latent Dirichlet allocation.

A user may create a detection rule using the data output as the statistical data, and may take into consideration the importance level of the signature for each cluster when selecting the signature.

The signature output unit 1020 may output the set signature.

To output the statistical data for latent Dirichlet allocation, at least one of steps S1010 and 1020 may be selectively performed.

FIG. 11 is a flowchart showing an output method according to an embodiment.

Step 240, described above with reference to FIG. 2, may include the following steps 1110 and 1120.

At step 1110, the statistical data output unit 1010 may output statistical data for latent Dirichlet allocation.

At step 1120, the signature output unit 1020 may output the set signature.

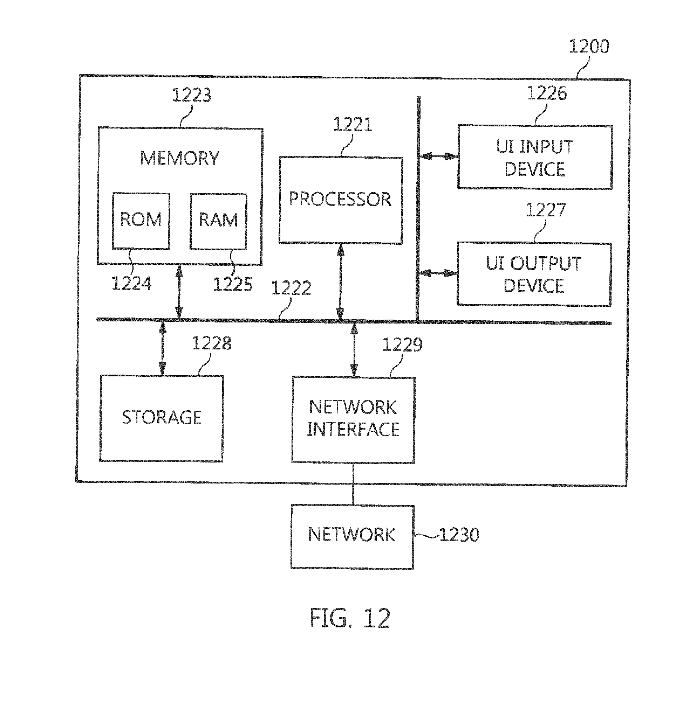

FIG. 12 is a configuration diagram showing a computer system for implementing the signature identification apparatus according to an embodiment.

The signature identification apparatus 100 may be implemented as an electronic device 1200, as shown in FIG. 12.

The signature identification apparatus 100 may be implemented in a computer system including a computer-readable storage medium. As shown in FIG. 12, the electronic device 1200 may include at least one processor 1221, memory 1223, a User Interface (UI) input device 1226, a UI output device 1227, and storage 1228, which communicate with each other through a bus 1222. The electronic device 1200 may further include a network interface 1229 connected to a network 1230. The processor may be a Central Processing Unit (CPU), or a semiconductor device for executing processing instructions stored in the memory 1223 or the storage 1228. Each of the memory 1223 and the storage 1228 may be any of various types of volatile or nonvolatile storage media. For example, the memory may include Read Only Memory (ROM) 1224 or Random Access Memory (RAM) 1225.

At least one module of the signature identification apparatus 100 and a subordinate module thereof may be configured to be stored in the memory 1223 and to be executed by the at least one processor 1221. The function related to the communication of data or information of the signature identification apparatus 100 may be performed by the network interface 1229.

The method according to the embodiment may be implemented as a program that can be executed by various computer means, and the program may be recorded on a computer-readable storage medium. The computer-readable storage medium may include program instructions, data files, and data structures, solely or in combination. Program instructions recorded on the storage medium may have been specially designed and configured for the present invention, or may be known to or available to those who have ordinary knowledge in the field of computer software. Examples of the computer-readable storage medium include all types of hardware devices specially configured to record and execute program instructions, such as magnetic media, such as a hard disk, a floppy disk, and magnetic tape, optical media, such as compact disk (CD)-read only memory (ROM) and a digital versatile disk (DVD), magneto-optical media, such as a floptical disk, ROM, RAM, and flash memory. Examples of the program instructions include machine code, such as code created by a compiler, and high-level language code executable by a computer using an interpreter. The hardware devices may be configured to operate as one or more software modules in order to perform the operation of the present invention, and vice versa.

As described above, the method and apparatus for automatically identifying the signature of malicious traffic using latent Dirichlet allocation are provided.

There are provided a method and apparatus for clustering network traffic containing malicious code or malicious traffic using latent Dirichlet allocation.

There are provided a method and apparatus for automatically identifying the signature of malicious traffic using the distribution information of keywords for respective clusters, with respect to network traffic classified by clustering.

There are provided a method and apparatus for identifying the signature of a detection rule, which allow an intrusion detection system to detect unknown malicious code or malicious traffic at a high detection rate.

There are provided a method and apparatus for identifying the signature of a detection rule, which allow an intrusion detection system to detect malicious code or malicious traffic having polymorphism as an internal feature at a high detection rate.

There are provided a method and apparatus for automatically performing statistical analysis and signature extraction on malicious code or malicious traffic when a security expert who operates an intrusion detection system creates a detection rule to be used in the intrusion detection system.

As described above, although the embodiments have been disclosed for illustrative purposes, those skilled in the art will appreciate that various modifications and changes are possible from the above description. For example, even if the above-described technologies are performed in a sequence differing from that in the description and/or even if the components of the above-described system, structure, apparatus, and circuit are coupled or combined in a way differing from that of the above-described method, or even if the components are replaced or substituted with other components or equivalents, suitable results may be achieved.

Therefore, it should be understood that the other embodiments and examples, and equivalents of the accompanying claims are included in the scope of the accompanying claims.

## Claims

1. A signature identification method, comprising:
generating one or more network flows by processing input data; and
generating a signature of a detection rule by applying latent Dirichlet allocation to the one or more network flows.

2. The signature identification method of claim 1, further comprising receiving the input data,
wherein the input data comprises at least one of malicious code data and malicious traffic data.

3. The signature identification method of claim 1 or 2, wherein generating the one or more network flows comprises dividing the input data into the one or more network flows.

4. The signature identification method of claim 1 or 2, wherein generating the one or more network flows comprises:
extracting at least one substring from the one or more network flows; and
calculating a frequency of discovery of the at least one substring from each of the one or more network flows.

5. The signature identification method of claim 4, wherein the at least one substring comprises all substrings discovered in the one or more network flows.

6. The signature identification method of one of claims 1 to 5, wherein generating the signature of the detection rule comprises:
classifying the one or more network flows into clusters;
extracting a substring that satisfies a predetermined condition from the one or more network flows classified into the clusters; and
setting the extracted substring as the signature of the detection rule required in order to detect the one or more network flows classified into the clusters.

7. The signature identification method of claim 6, wherein the one or more network flows are classified into the clusters using a learned allocation model for latent Dirichlet allocation.

8. The signature identification method of claim 6 or 7, wherein generating the signature of the detection rule further comprises learning the allocation model for latent Dirichlet allocation using the one or more network flows.

9. The signature identification method of claim 8, wherein an environmental variable for learning comprises a parameter for Dirichlet distribution.

10. The signature identification method of claim 9, wherein the Dirichlet distribution enables modeling of a probability that, for the one or more network flows, each network flow will contain at least one certain topic.

11. The signature identification method of one of claims 6 to 10, wherein the substring that satisfies the predetermined condition is a substring having a high discovery frequency.

12. The signature identification method of one of claims 6 to 10, wherein the substring that satisfies the predetermined condition is a substring having a discovery frequency that is equal to or greater than a predetermined value.

13. The signature identification method of one of claims 1 to 12, further comprising outputting results of applying the latent Dirichlet allocation.

14. The signature identification method of claim 13, wherein outputting the results of applying the latent Dirichlet allocation comprises outputting statistical data for the latent Dirichlet allocation.

15. A signature identification apparatus, comprising:
a preprocessing unit for generating one or more network flows by processing input data; and
a generation unit for generating a signature of a detection rule by applying latent Dirichlet allocation to the one or more network flows.
